(19) Europäisches Patentamt
European Patent Office
Office européen des brevets

(11) **EP 4 067 194 B1**

(12) **FASCICULE DE BREVET EUROPEEN**

(45) Date de publication et mention de la délivrance du brevet:
**04.12.2024 Bulletin 2024/49**

(21) Numéro de dépôt: **22164975.9**

(22) Date de dépôt: **29.03.2022**

(51) Classification Internationale des Brevets (IPC):
**B61D 17/02** *(2006.01)* **F15D 1/10** *(2006.01)*
**F15D 1/12** *(2006.01)*

(52) Classification Coopérative des Brevets (CPC):
**B61D 17/02; F15D 1/005; F15D 1/12;** Y02T 30/00

(54) **VÉHICULE FERROVIAIRE AVEC SURFACE AÉRODYNAMIQUE**

SCHIENENFAHRZEUG MIT AERODYNAMISCHER OBERFLÄCHE

RAILWAY VEHICLE WITH AERODYNAMIC SURFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.03.2021 FR 2103257**

(43) Date de publication de la demande:
**05.10.2022 Bulletin 2022/40**

(73) Titulaire: **ALSTOM Holdings**
**93400 Saint-Ouen-sur-Seine (FR)**

(72) Inventeurs:
• **DO, Huu Ti**
**17300 Rochefort (FR)**
• **ROLL, Stéphane**
**67170 Brumath (FR)**
• **KARIMI, Arman**
**17440 Aytré (FR)**

(74) Mandataire: **Lavoix**
**2, place d'Estienne d'Orves**
**75441 Paris Cedex 09 (FR)**

(56) Documents cités:
WO-A1-2004/083651    WO-A1-2005/090155
WO-A1-2015/102231    CN-A- 101 767 592
DE-A1- 102009 001 404    DE-A1- 102010 005 250
DE-A1- 19 840 303

**Description**

La présente invention concerne un véhicule ferroviaire, du type comprenant une première voiture, ladite première voiture comprenant une première enveloppe externe destinée à faciliter un écoulement d'air le long du véhicule ferroviaire, ladite première enveloppe externe comprenant une première surface et une pluralité de première fossettes arrangées sur ladite première surface.

Lors du déplacement d'un train à grande vitesse, le frottement de l'air sur les parois du train génère un effort important s'opposant audit déplacement. Cet effort est connu sous le nom de traînée de frottement.

Il est connu de faciliter l'écoulement de l'air dans un véhicule en déplacement, en disposant sur sa surface externe des alvéoles ou fossettes, comme sur la surface des balles de golf. Un tel véhicule est notamment décrit dans les documents WO2004/083651, WO2005/090155 et DE19840303.

Cependant, lors du déplacement d'un train de grande longueur, l'effet des frottements de l'air varie sur la longueur de la rame.

La présente invention a pour but de proposer une surface aérodynamique pour véhicule ferroviaire, permettant une optimisation de l'écoulement de l'air sur l'ensemble du véhicule.

A cet effet, l'invention a pour objet un véhicule ferroviaire du type précité, comprenant en outre une deuxième voiture, reliée à la première voiture et située derrière ladite première voiture selon un sens de déplacement du véhicule, ladite deuxième voiture comprenant une deuxième enveloppe externe destiné à faciliter un écoulement d'air le long du véhicule ferroviaire, ladite deuxième enveloppe externe comprenant une deuxième surface et une pluralité de deuxièmes fossettes arrangées sur ladite deuxième surface, chacune des première et deuxième surface étant disposée selon un plan parallèle au sens de déplacement du véhicule, chaque première ou deuxième fossette formant une cavité dans la première ou la deuxième surface, chaque première ou deuxième fossette comportant une zone centrale entourée d'une zone périphérique, chacune desdites zones centrale et périphérique ayant une forme sensiblement circulaire, des dimensions des deuxièmes fossettes de la deuxième voiture étant supérieures à des dimensions des premières fossettes de la première voiture.

Suivant d'autres aspects avantageux de l'invention, le véhicule ferroviaire comporte l'une ou plusieurs des caractéristiques suivantes, prises isolément ou suivant toutes les combinaisons techniquement possibles :

- la zone centrale présente une forme concave et la zone périphérique présente une courbure convexe ;
- les fossettes de la première et/ou de la deuxième voiture sont disposées sur la première surface selon un motif constant ;
- des centres des fossettes forment des premiers alignements selon la direction de déplacement, avec une distance constante entre deux centres consécutifs d'un même premier alignement ;
- la distance Lx entre deux centres consécutifs est choisie en fonction d'un diamètre D des fossettes, de sorte que Lx/D est compris entre 1,74 et 4,0 ;
- les centres des fossettes forment des deuxièmes alignements selon une direction perpendiculaire à la direction de déplacement, avec une distance Ly constante entre deux centres consécutifs d'un même deuxième alignement, choisie de sorte que Ly/Lx est compris entre 0,5 et 2,0.
- au moins l'une des première et deuxième voitures comporte un panneau composite, ledit panneau composite comprenant une couche de coeur disposée entre une peau interne et une peau externe, des premières ou deuxièmes fossettes étant arrangées sur la peau externe, ladite peau externe formant ainsi au moins partiellement la première ou la deuxième enveloppe externe ;
- au moins l'une des première et deuxième enveloppes externes est recouverte d'un revêtement hydrophobe (60) ;
- le véhicule ferroviaire comprend en outre une troisième voiture reliée aux première et deuxième voitures, ladite troisième voiture comprenant une troisième enveloppe externe, la deuxième voiture étant disposée entre les première et troisième voitures, la troisième enveloppe externe de la troisième voiture comprenant une première surface et une pluralité de premières fossettes arrangées sur ladite première surface ;
- le véhicule ferroviaire comprend en outre une quatrième voiture disposée entre la deuxième et la troisième voitures, ladite quatrième voiture comprenant une quatrième enveloppe externe, la quatrième enveloppe externe de la quatrième voiture comprenant une deuxième surface et une pluralité de deuxième fossettes arrangées sur ladite deuxième surface.

L'invention sera mieux comprise à la lecture de la description qui va suivre, donnée uniquement à titre d'exemple non limitatif et faite en se référant aux dessins sur lesquels :

la figure 1 est une vue schématique d'un véhicule ferroviaire selon un mode de réalisation de l'invention ;
la figure 2 est une vue d'un élément du véhicule de la figure 1 ;
la figure 3 est une vue de détail, en coupe, de l'élément de la figure 2 ; et

la figure 4 est une vue de détail, en coupe, du véhicule ferroviaire de la figure 1 selon un mode particulier de réalisation.

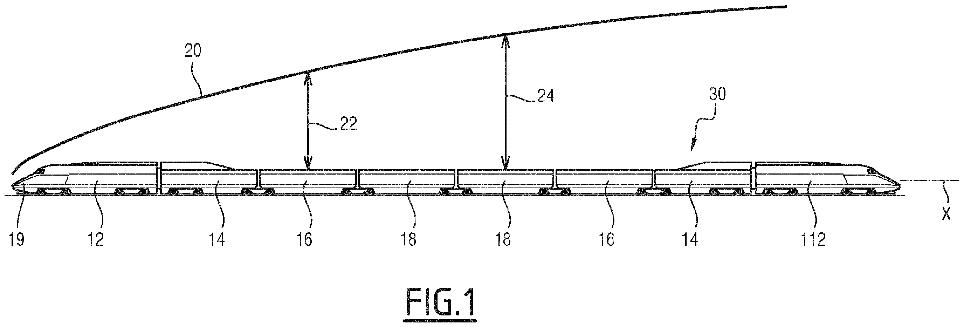

La figure 1 représente un véhicule ferroviaire 10 selon un mode de réalisation de l'invention.

Le véhicule ferroviaire 10 s'étend sensiblement selon une direction X, correspondant à une direction de déplacement du véhicule.

Le véhicule ferroviaire 10 est formé d'une pluralité de voitures reliées les unes aux autres et alignées selon la direction X.

En particulier, le véhicule ferroviaire 10 comporte une première 12 et une deuxième 112 voitures d'extrémité, formant les extrémités dudit véhicule 10 selon X.

Dans le mode de réalisation représenté, chacune des voitures d'extrémité 12, 112 est une motrice apte à mettre en mouvement le véhicule 10. Ainsi, le véhicule 10 est apte à se déplacer selon X dans les deux sens, sous l'effet d'une traction de la voiture d'extrémité 12, 112 se trouvant à l'avant.

Le véhicule ferroviaire 10 comporte en outre plusieurs voitures intermédiaires disposées entre les première 12 et deuxième 112 voitures d'extrémité.

Dans le mode de réalisation représenté, lesdites voitures intermédiaires comportent des voitures 14, 16 et 18 formant respectivement un premier, un deuxième et un troisième groupe.

Plus précisément, le véhicule ferroviaire 10 comporte : deux voitures 14 du premier groupe, chaque voiture 14 étant adjacente à l'une des voitures d'extrémité 12, 112 ; deux voitures 16 du deuxième groupe, chaque voiture 16 étant adjacente à une voiture 14 du premier groupe ; et deux voitures 18 du troisième groupe, chaque voiture 18 étant adjacente à une voiture 16 du deuxième groupe. Les deux voitures 18 sont adjacentes l'une à l'autre.

On considère que les deux voitures intermédiaires 14, 16, 18 de chaque groupe sont sensiblement identiques l'une à l'autre. Dans le mode de réalisation représenté, on considère par ailleurs que les première 12 et deuxième 112 voitures d'extrémité sont sensiblement identiques. Le véhicule ferroviaire 10 est donc sensiblement symétrique par rapport à un plan perpendiculaire à X et passant entre les deux voitures 18 du troisième groupe.

On considère un déplacement à grande vitesse du véhicule ferroviaire 10 dans lequel la première voiture d'extrémité 12 forme une extrémité avant 19 dudit véhicule.

Dans un véhicule ferroviaire analogue, issu de l'état de la technique, un tel déplacement à grande vitesse induit une traînée de frottement qui génère la formation d'une couche limite d'air autour du véhicule. La forme d'une telle couche limite 20 est représentée schématiquement sur la figure 1.

Une hauteur 22, 24 de la couche limite 20 augmente avec une distance selon X par rapport à la motrice 12.

Le véhicule ferroviaire 10 selon l'invention est configuré pour prévenir la formation de la couche limite 20 afin de diminuer la traînée de frottement.

A cet effet, chaque voiture d'extrémité 12, 112 et chaque voiture intermédiaire 14, 16 et 18 du véhicule ferroviaire 10 comporte une enveloppe externe 30 destinée à faciliter un écoulement d'air le long du véhicule ferroviaire 10.

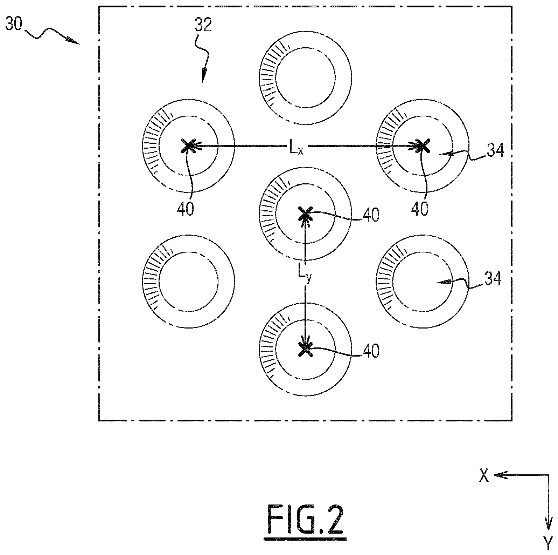

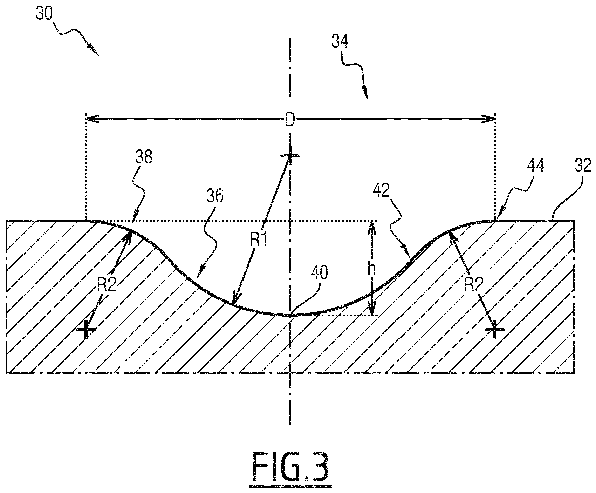

Les figures 2 et 3 montrent des vues de l'enveloppe externe 30 de l'une des voitures du véhicule ferroviaire 10.

L'enveloppe externe 30 comporte une surface 32, sensiblement lisse, et une pluralité de fossettes 34 ménagées dans ladite surface 32.

La figure 3 montre une vue en coupe d'une fossette 34. Ladite fossette 34 forme une cavité dans la surface 32.

On considère que ladite surface 32 est sensiblement plane à proximité immédiate de la fossette 34. Plus précisément, on considère que ladite surface 32 est située dans un plan (X, Y), les directions X et Y étant perpendiculaires. X est la direction de déplacement du véhicule 10, qui correspond à une direction d'écoulement de l'air le long de l'enveloppe externe 30.

La fossette 34 comporte une zone centrale 36 entourée d'une zone périphérique 38. Chacune des zones centrale 36 et périphérique 38 a une forme sensiblement circulaire en projection dans le plan (X, Y).

La zone centrale 36, concave, a notamment la forme d'une portion de sphère d'un premier rayon R1. On note h une profondeur maximale de la zone centrale 36 par rapport à la surface 32. La profondeur h correspond à un centre 40 de ladite zone centrale 36, considéré dans la suite de la description comme un centre 40 de la fossette 34.

La zone périphérique 38 relie la zone centrale 36 à la surface 32. Ladite zone périphérique a une forme convexe, notamment la forme d'une portion de tore d'un deuxième rayon R2. De préférence, R2 est inférieur à R1.

Dans le plan de coupe de la figure 3, une courbure du fond de la fossette 34 marque une inflexion au niveau d'une jonction 42 entre la zone centrale 36 et la zone périphérique 38.

On note D un diamètre de la fossette 34, mesuré au niveau d'une jonction 44 entre la zone périphérique 38 et la surface 32.

De préférence, les fossettes 34 sont disposées sur la surface 32 selon un motif constant.

Plus préférentiellement, comme représenté sur la figure 2, les centres 40 des fossettes 34 forment des alignements selon X. Une distance entre deux centres 40 consécutifs selon X est notée Lx.

Par ailleurs, préférentiellement, les centres 40 des fossettes 34 forment des alignements selon Y. Une distance entre deux centres 40 consécutifs selon Y est notée Ly.

De préférence, pour une valeur D du diamètre de la fossette 34, l'enveloppe externe 30 est configurée telle que Lx/D est compris entre 1,74 et 4,0.

Par ailleurs, de préférence, l'enveloppe externe 30 est configurée telle que Ly/Lx est compris entre 0,5 et 2,0.

De manière préférentielle, $Ly/Lx = \frac{1}{\sqrt{3}}$. Comme dans le mode de réalisation représenté à la figure 2, les centres 40 des fossettes 34 forment alors des triangles équilatéraux.

Selon l'invention, une forme de l'enveloppe externe 30 des voitures du véhicule ferroviaire 10 varie en fonction de la distance avec l'extrémité avant 19 dudit véhicule. La forme de la couche limite liée à la traînée de frottement peut ainsi être optimisée sur une plus grande longueur du véhicule.

En particulier, l'enveloppe externe 30 des voitures intermédiaires 14, 16, 18 comporte des fossettes 34 présentant des dimensions D, h supérieures aux dimensions des fossettes 34 des voitures d'extrémité 12, 112.

Préférentiellement, les dimensions D, h des fossettes 34 d'une voiture intermédiaire 14, 16 proche d'une voiture d'extrémité 12, 112 sont inférieures aux dimensions D, h des fossettes 34 d'une voiture intermédiaire 16, 18 plus éloignée d'une voiture d'extrémité.

Des exemples de dimensions D, h des fossettes 34 sont indiqués dans le tableau 1 ci-dessous, pour chaque voiture d'extrémité 12, 112 ou voiture intermédiaire 14, 16, 18 du véhicule ferroviaire 10 précédemment décrit [Table 1] :

Tableau 1

| Voiture | 12, 112 | 14 | 16 | 18 |
|---|---|---|---|---|
| h (mm) | 1,3 | 1,65 | 2,0 | 2,2 |
| D (mm) | 42,3 | 55 | 65,7 | 74,3 |

De telles valeurs correspondent notamment à une optimisation de l'écoulement de l'air pour un véhicule ferroviaire 10 destiné à circuler alternativement dans les deux sens de circulation, la première 12 ou la deuxième 112 voiture d'extrémité jouant le rôle de la motrice.

Selon un autre exemple de réalisation, des exemples de dimensions D, h des fossettes 34 sont indiqués dans le tableau 2 ci-dessous, en fonction d'une distance d selon X avec l'extrémité avant 19 du véhicule ferroviaire 10 [Table 2] :

Tableau 2

| d (m) | d € [20 ;40] ou d € [160 ;180] | d € [40 ;60] ou d € [140 ;160] | d € [60 ;80] ou d € [120 ;140] | d € [80 ;120] |
|---|---|---|---|---|
| h (mm) | 1,3 | 1,65 | 2,0 | 2,2 |
| D (mm) | 42,3 | 55 | 65,7 | 74,3 |

De telles valeurs correspondent notamment à une optimisation de l'écoulement de l'air pour les 100 premiers mètres d'un véhicule ferroviaire 10 d'environ 200 mètres, pour un déplacement à 300 km/h environ.

Selon des variantes non représentées de l'invention, le véhicule ferroviaire comporte un plus grand nombre, ou au contraire un moins grand nombre, de voitures intermédiaires entre les voitures d'extrémité 12, 112. Cependant, de préférence, lesdites voitures intermédiaires sont configurées de sorte que les dimensions D, h de leurs fossettes 34 augmentent avec l'éloignement de la voiture correspondante avec une voitures d'extrémité. De préférence, les dimensions des fossettes 34 du véhicule ferroviaire varient de manière symétrique par rapport à un plan perpendiculaire à X.

Selon une autre variante non représentée de l'invention, le véhicule ferroviaire comporte une seule motrice 12 et une pluralité de voitures 14, 16, 18 reliées à ladite motrice. La motrice 12 présente des fossettes 34 avec des dimensions D, h minimales. Les dimensions D, h des fossettes 34 des voitures 14, 16, 18 augmentent avec l'éloignement de chaque voiture d'avec la motrice 12.

Un tel véhicule ferroviaire, correspondant à une partie du véhicule 10 décrit ci-dessus, est destiné à circuler selon un seul sens de déplacement.

Les fossettes 34 de l'enveloppe externe 30 des voitures du véhicule ferroviaire peuvent être réalisées dans la surface 32 selon plusieurs méthodes. Des méthodes possibles sont par exemple le poinçonnage de la surface 32, l'abrasion mécanique d'une couche métallique ou l'abrasion d'une couche de revêtement de surface.

Il est également possible d'ajouter sur la voiture un revêtement dans lequel sont formées les fossettes, tel qu'un revêtement fluide mis en forme avant durcissement, ou un film solide collé à la voiture.

Les fossettes 34 peuvent également être réalisées par impression 3D sur la voiture.

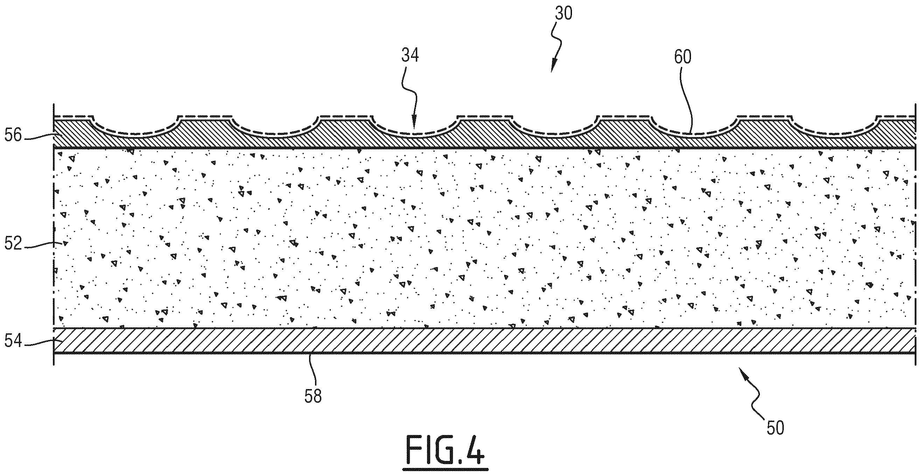

Selon un mode de réalisation préférentiel, tel que représenté sur la figure 4, le véhicule ferroviaire 10 comporte au moins un panneau composite 50, ledit panneau composite formant une paroi extérieure d'une voiture d'extrémité 12, 112 ou d'une voiture intermédiaire 14, 16, 18.

Le panneau composite 50 est une structure de type sandwich, comprenant une couche de coeur 52 disposée entre une peau interne 54 et une peau externe 56.

La couche de coeur 52, destinée par exemple à des fonctions d'isolation thermique et/ou phonique, est par exemple formée de mousse, de balsa ou de liège.

Chacune des peaux interne 54 et externe 56 est formée d'une feuille métallique, par exemple de type aluminium ou acier inoxydable. La peau interne 54, orientée vers l'intérieur de la voiture 12, 112, 14, 16, 18, présente de préférence une surface 58 lisse.

La peau externe 56 fait partie de l'enveloppe externe 30 du véhicule ferroviaire 10. En particulier, des fossettes 34 telles que décrites précédemment sont ménagées dans l'épaisseur de ladite peau externe 56. Les fossettes 34 sont par exemple réalisées par emboutissage ou écrouissage de la peau externe 56.

En outre, selon un mode de réalisation de l'invention, tel que représenté sur la figure 4, l'enveloppe externe 30 du véhicule ferroviaire 10 est recouverte d'un revêtement hydrophobe 60. Un tel revêtement évite la rétention de pollution solide, de type poussière, qui risquerait à terme de boucher les fossettes 34.

Un tel revêtement hydrophobe, de type cire ou vernis déperlant, est par exemple déposé par projection sur l'enveloppe externe 30. Il permet de prolonger dans le temps l'efficacité de l'architecture aérodynamique du véhicule ferroviaire 10.

**Revendications**

**1.** Véhicule ferroviaire (10) comprenant une première voiture (12), ladite première voiture comprenant une première enveloppe externe (30) destinée à faciliter un écoulement d'air le long du véhicule ferroviaire, ladite première enveloppe externe comprenant une première surface (32) et une pluralité de premières fossettes (34) arrangées sur ladite première surface (32),

le véhicule ferroviaire comprenant en outre une deuxième voiture (14), reliée à la première voiture et située derrière ladite première voiture selon un sens (X) de déplacement du véhicule, ladite deuxième voiture comprenant une deuxième enveloppe externe (30) destinée à faciliter un écoulement d'air le long du véhicule ferroviaire, ladite deuxième enveloppe externe comprenant une deuxième surface (32) et une pluralité de deuxièmes fossettes (34) arrangées sur ladite deuxième surface (32),
chacune des première et deuxième surface (32) étant disposée selon un plan parallèle au sens de déplacement du véhicule,
chaque première ou deuxième fossette (34) formant une cavité dans la première ou la deuxième surface (32),
chaque première ou deuxième fossette (34) comportant une zone centrale (36) entourée d'une zone périphérique (38), chacune desdites zones centrale et périphérique ayant une forme sensiblement circulaire,
des dimensions (D, h) des deuxièmes fossettes (34) de la deuxième voiture (14) étant supérieures à des dimensions (D, h) des premières fossettes (34) de la première voiture (12).

**2.** Véhicule ferroviaire selon la revendication 1, dans lequel la zone centrale (36) présente une forme concave et la zone périphérique (38) présente une courbure convexe.

**3.** Véhicule ferroviaire selon l'une des revendications précédentes, dans lequel les fossettes (34) de la première (12) et/ou de la deuxième (14) voiture sont disposées sur la première surface (32) selon un motif (Lx, Ly) constant.

**4.** Véhicule ferroviaire selon la revendication 3, dans lequel des centres (40) des fossettes (34) forment des premiers alignements selon la direction (X) de déplacement, avec une distance (Lx) constante entre deux centres consécutifs d'un même premier alignement.

**5.** Véhicule ferroviaire selon la revendication 4, dans lequel la distance (Lx) entre deux centres consécutifs est choisie en fonction d'un diamètre (D) des fossettes, de sorte que Lx/D est compris entre 1,74 et 4,0.

**6.** Véhicule ferroviaire selon l'une des revendications 4 ou 5, dans lequel les centres (40) des fossettes (34) forment des deuxièmes alignements selon une direction (Y) perpendiculaire à la direction de déplacement, avec une distance (Ly) constante entre deux centres consécutifs d'un même deuxième alignement, choisie de sorte que Ly/Lx est compris entre 0,5 et 2,0.

**7.** Véhicule ferroviaire selon l'une des revendications précédentes, dans lequel au moins l'une des première et deuxième voitures comporte un panneau composite (50), ledit panneau composite comprenant une couche de coeur (52) disposée entre une peau interne (54) et une peau externe (56),

des premières ou deuxièmes fossettes (34) étant arrangées sur la peau externe (56), ladite peau externe formant ainsi au moins partiellement la première ou la deuxième enveloppe externe (30).

**8.** Véhicule ferroviaire selon l'une des revendications précédentes, dans lequel au moins l'une des première et deuxième enveloppes externes (30) est recouverte d'un revêtement hydrophobe (60).

**Patentansprüche**

**1.** Schienenfahrzeug (10), das einen ersten Wagen (12) umfasst, wobei der erste Wagen eine erste äußere Hülle (30) umfasst, die dazu bestimmt ist, das Strömen von Luft entlang des Schienenfahrzeugs zu erleichtern, wobei die erste äußere Hülle eine erste Oberfläche (32) und eine Vielzahl erster Vertiefungen (34) umfasst, die auf der ersten Oberfläche (32) angeordnet sind,

wobei das Schienenfahrzeug ferner einen zweiten Wagen (14) umfasst, der mit dem ersten Wagen verbunden ist und sich hinter dem ersten Wagen in einer Fahrtrichtung (X) des Fahrzeugs befindet, wobei der zweite Wagen eine zweite äußere Hülle (30) umfasst, die dazu bestimmt ist, das Strömen von Luft entlang des Schienenfahrzeugs zu erleichtern, wobei die zweite äußere Hülle eine zweite Oberfläche (32) und eine Vielzahl zweiter Vertiefungen (34) umfasst, die auf der zweiten Oberfläche (32) angeordnet sind,

wobei jede von der ersten und zweiten Oberfläche (32) gemäß einer Ebene parallel zur Fahrtrichtung des Fahrzeugs angeordnet ist, wobei jede erste oder zweite Vertiefung (34) einen Hohlraum in der ersten oder zweiten Oberfläche (32) bildet, wobei jede erste oder zweite Vertiefung (34) einen zentralen Bereich (36) aufweist, der von einem peripheren Bereich (38) umgeben ist, wobei jeder von dem zentralen und peripheren Bereich eine im Wesentlichen kreisförmige Form aufweist,

wobei Abmessungen (D, h) der zweiten Vertiefungen (34) des zweiten Wagens (14) größer als Abmessungen (D, h) der ersten Vertiefungen (34) des ersten Wagens (12) sind.

**2.** Schienenfahrzeug nach Anspruch 1, wobei der zentrale Bereich (36) eine konkave Form aufweist und der periphere Bereich (38) eine konvexe Krümmung aufweist.

**3.** Schienenfahrzeug nach einem der vorhergehenden Ansprüche, wobei die Vertiefungen (34) des ersten (12) und/oder zweiten (14) Wagens auf der ersten Oberfläche (32) in einem konstanten Muster (Lx, Ly) angeordnet sind.

**4.** Schienenfahrzeug nach Anspruch 3, wobei Mittelpunkte (40) der Vertiefungen (34) erste Ausrichtungen in Fahrtrichtung (X) mit einem konstanten Abstand (Lx) zwischen zwei aufeinanderfolgenden Mittelpunkten derselben ersten Ausrichtung bilden.

**5.** Schienenfahrzeug nach Anspruch 4, wobei der Abstand (Lx) zwischen zwei aufeinanderfolgenden Mittelpunkten in Abhängigkeit von einem Durchmesser (D) der Vertiefungen gewählt wird, so dass Lx/D zwischen 1,74 und 4,0 liegt.

**6.** Schienenfahrzeug nach einem der Ansprüche 4 oder 5, wobei die Mittelpunkte (40) der Vertiefungen (34) zweite Ausrichtungen in einer Richtung (Y) senkrecht zur Fahrtrichtung bilden, mit einem konstanten Abstand (Ly) zwischen zwei aufeinanderfolgenden Mittelpunkten einer gleichen zweiten Ausrichtung, der so gewählt ist, dass Ly/Lx zwischen 0,5 und 2,0 liegt.

**7.** Schienenfahrzeug nach einem der vorhergehenden Ansprüche, wobei mindestens einer von dem ersten und zweiten Wagen eine Verbundplatte (50) aufweist, wobei die Verbundplatte eine Kernschicht (52) umfasst, die zwischen einer Innenhaut (54) und einer Außenhaut (56) angeordnet ist,

wobei erste oder zweite Vertiefungen (34) auf der Außenhaut (56) angeordnet sind, wodurch die Außenhaut zumindest teilweise die erste oder zweite äußere Hülle (30) bildet.

**8.** Schienenfahrzeug nach einem der vorhergehenden Ansprüche, wobei mindestens eine von der ersten und zweiten äußeren Hülle (30) mit einer wasserabweisenden Beschichtung (60) bedeckt ist.

**Claims**

1.  A railway vehicle (10) comprising a first car (12), said first car comprising a first outer jacket (30) for facilitating airflow along the railway vehicle, said first outer jacket comprising a first surface (32) and a plurality of first dimples (34) arranged on said first surface (32), the railway vehicle further comprising a second car (14), connected to the first car and situated behind said first car in a direction (X) of movement of the vehicle, said second car comprising a second outer jacket (30) for facilitating airflow along the railway vehicle, said second outer jacket comprising a second surface (32) and a plurality of second dimples (34) arranged on said second surface (32), each of the first and second surface (32) being arranged along a plane parallel to the direction of movement of the vehicle, each first or second dimple (34) forming a cavity in the first or second surface (32), each first or second dimple (34) having a central area (36) surrounded by a peripheral area (38), each of said central and peripheral areas having a substantially circular shape, dimensions (D, h) of the second dimples (34) of the second car (14) being greater than dimensions (D, h) of the first dimples (34) of the first car (12).

2.  The railway vehicle according to claim 1, wherein the central area (36) has a concave shape and the peripheral area (38) has a convex curvature.

3.  The railway vehicle according to one of the preceding claims, wherein the dimples (34) of the first (12) and/or the second (14) car are arranged on the first surface (32) in a constant pattern (Lx, Ly).

4.  The railway vehicle according to claim 3, wherein the centers (40) of the dimples (34) form first alignments in the direction (X) of movement, with a constant distance (Lx) between two consecutive centers of the same first alignment.

5.  The railway vehicle according to claim 4, wherein the distance (Lx) between two consecutive centers is chosen based on a diameter (D) of the dimples, so that Lx/D is between 1.74 and 4.0.

6.  The railway vehicle according to one of claims 4 or 5, wherein the centers (40) of the dimples (34) form second alignments in a direction (Y) perpendicular to the direction of movement, with a constant distance (Ly) between two consecutive centers of the same second alignment, chosen so that Ly/Lx is between 0.5 and 2.0.

7.  The railway vehicle according to one of the preceding claims, wherein at least one of the first and second cars comprises a composite panel (50), said composite panel comprising a core layer (52) arranged between an inner skin (54) and an outer skin (56),
    first or second dimples (34) being arranged on the outer skin (56), said outer skin thus at least partially forming the first or the second outer jacket (30).

8.  The railway vehicle according to one of the preceding claims, wherein at least one of the first and second outer jackets (30) is covered with a hydrophobic coating (60).

FIG.1

30

32

$L_x$

34

40

40

40

40

$L_y$

34

40

X

Y

## FIG.2

## FIG.3

FIG.4

EP 4 067 194 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004083651 A
- WO 2005090155 A
- DE 19840303